Europäisches Patentamt

European Patent Office

Office européen des brevets

(11) Publication number: **0 176 177**
**B1**

(12)

# EUROPEAN PATENT SPECIFICATION

(45) Date of publication of patent specification: **20.09.89**

(51) Int. Cl.⁴: **B 29 C 47/88**, B 29 C 55/02

(21) Application number: **85304982.3**

(22) Date of filing: **12.07.85**

(54) **Thermoplastic sheet preparation method.**

(30) Priority: **25.07.84 JP 153206/84**
**27.07.84 JP 155520/84**

(43) Date of publication of application:
**02.04.86 Bulletin 86/14**

(45) Publication of the grant of the patent:
**20.09.89 Bulletin 89/38**

(84) Designated Contracting States:
**AT BE CH DE FR GB IT LI NL SE**

(56) References cited:
**DE-A-1 529 935**
**DE-A-2 602 885**
**DE-B-2 457 250**
**US-A-2 728 944**
**US-A-3 377 413**
**US-A-3 862 285**
**US-A-4 078 033**

(73) Proprietor: **IDEMITSU PETROCHEMICAL CO. LTD.**
**1-1, Marunouchi 3-chome Chiyoda-ku Tokyo (JP)**

(72) Inventor: **Fujii, Atsushi**
**No. 765-4, Mariyatsu**
**Kisarazu-shi Chiba-ken (JP)**
Inventor: **Kaneda, Kazuhisa**
**No. 521, Kimizuka**
**Ichihara-shi Chiba-ken (JP)**
Inventor: **Tokiya, Yoshihiro**
**No. 473, Kaiho**
**Ichihara-shi Chiba-ken (JP)**

(74) Representative: **SERJEANTS**
**25, The Crescent King Street**
**Leicester, LE1 6RX (GB)**

# EP 0 176 177 B1

**Description**

TECHNICAL FIELD

The invention relates to the preparation of a crystalline thermoplastic sheet by a reproducible, highspeed method to give excellent transparency, high gloss and uniformity. The resulting sheet can be used as such in the fabrication of folders for papers, carboard products, boxes and containers owing to its thermoformability.

BACKGROUND ART

Thermoplastic sheets of high transparency are mostly made of non-crystalline or amorphous polyvinyl chloride or polystyrene. Sheets of these amorphous thermoplastics have excellent thermoformability, but polyvinyl chloride is poor in respect of hygiene, heat resistance, and moisture-proofness. Moreover its waste cannot be disposed without environmental pollution due for example to the emission of chlorine-containing gases in the course of incineration. Polystyrenes are not satisfactory in respect of heat resistance, impact strength, and moisture-proofness. Nevertheless, sheets of these amorphous thermoplastics are widely used as packaging material because of their excellent transparency.

The corresponding crystalline thermoplastics have excellent mechanical strength and heat resistance, but are inferior in transparency owing to their crystallinity. Transparency can be increased by quenching in cold water, but the consequent appearance of haze dots is unavoidable. Polypropylenes have excellent strength, rigidity, heat resistance, and moisture-proofness, but are far from satisfactory when transparency is essential. Their applicability is limited also owing to their low rigidity and thermoformability in comparison to the above amorphous thermoplastics. Various attempts and proposals have been made to improve the transparency of polypropylene sheets. An extruded sheet of molten polypropylene has been quenched by various methods to control its crystalline structure, but none has been entirely satisfactory for one reason or another.

Japanese Patent Kokai 53-128673 proposes to impart to both surfaces of a thermoplastic sheet a surface roughness of 0.7 μm RMS or less to stretch it unidirectionally in a ratio of 3 times or less, and then to thermoform. This method does not improve internal haze, and there remains the difficulty of reducing the roughness on both surfaces. The resulting sheet cannot have good transparency. A stretch ratio as high as 1.5 to 2.5 times reduces thermoformability. The deep drawing tends to tear the sheet and non-uniformity is unavoidable as a result of unevenness. The sheet obtained has a relatively low heat resistance owing to its orientation, and so the sheet is not suitable for vacuum forming which calls for a relatively high thermoforming temperature.

DE—A—2457250 discloses a method in which a melt is extruded into a sheet and cooled by passing down a shaft with water flowing on each side in the same direction as the sheet.

However there is no indication in that prior art document that by varying the processing conditions, it is possible to improve the transparency of crystalline thermoplastic sheets.

In the light of this prior art document, the object of the present invention is thus to provide a method for producing crystalline thermoplastic sheets having improved transparency while avoiding the appearance of haze dots.

This object is achieved in accordance with the present invention by a method for the preparation of a crystalline thermoplastic sheet which comprises extruding a melt of a crystalline thermoplastic into a sheet and quenching by introduction of the sheet into a slit in the same direction as cooling water, the flow velicity of the cooling water through the slit being larger than the velocity of the sheet, and stretching the quenched sheet at a temperature below its melting point in a ratio in the range from 1.02 to 2.00 times.

Suitable starting crystalline thermoplastics include polyolefins such as polypropylenes, random or block copolymers of propylene with 30 mol% or less of an α-olefin, polyethylenes, random copolymers of ethylene with 30 mol% or less of an α-olefin, polybutenes, polyesters such as poly(ethylene terephthalate), and poly(butylene terephthalate), polyamides such as nylon 6, nylon 6,6 and nylon 6,10, poly(phenylene sulphide), and polyether ether ketones. The preferred polypropylenes include homopolymers of propylene, random copolymers of propylene with an α-olefin or a mixture of two or more thereof. The polypropylene should have a melt index of from 0.2 to 20 g/10 minutes, or preferably from 0.3 to 15 g/10 minutes. When the melt index is lower than 0.2 g/10 minutes, there are the disadvantages of unduly low rigidity of the sheet and low productivity due to the decreased rate of extrusion. When the melt index is higher than 20 g/10 minutes, difficulties are encountered in shaping of the sheet due to the low melt viscosity.

The starting thermoplastic may be admixed according to need with additives including nucleating agents, lubricants, antioxidants, ultraviolet absorbers, radiation resistance agents, antistatic agents, and colouring agents.

Nucleating agents are exemplified by aromatic and aliphatic carboxylic acids, dibenzylidene sorbitol, silica fluor, and talc. The thermoplastic may be blended with a petroleum resin, adhesive resin or elastomer, for example.

The melt-extrusion of the thermoplastic resin into the form of a sheet is generally by means of a screw extruder in which the feed is continuously melted and kneaded, and the melt is extruded through a T-die in the form of a sheet. It is preferable to use a machine with low shear stress, which is capable of kneading and extruding at a relatively low temperature, and provided with a screw having space for stress relaxation at

2

the front end. Two- or multi-layer coextrusion of a numnber of different thermoplastics in two or more extruders is possible. A homopolymerized polypropylene and a random-polymerized polypropylene, polypropylenes having different values of melt index, a polypropylene and an adhesive polyolefin modified with an unsaturated carboxylic acid or a derivative thereof, a polypropylene and a polyethylene or an ethylene-vinyl acetate copolymer, or a polypropylene and an ethylene-vinyl alcohol copolymer may be combined in this way.

The extrusion should be under such conditions that the extruded sheet, still in the molten state, has high transparency and smooth surfaces, and is little swollen and relaxed. The extruder is preferably provided with a screw having of a low-compression part, shear part and stress-relaxation part, and the extrusion is preferably performed by keeping the thermoplastic at a low temperature after the stress has been relaxed. The temperature at the die exit should preferably be controlled by a die-lip heater at from 10 to 60 C degrees higher than the thermoplastic. The die should be free of blemishes and scratches on the surface so as to give an extrusion-moulded sheet having smooth surfaces and good transparency.

In the quenching, the extruded sheet, still in a molten state, is introduced into the slit along the flow direction of the cooling water. The flow velocity of the cooling water through the slit should be larger than the velocity of the sheet. Preferably, the flow velocity of the water should be twice or more larger than that of the sheet. The material forming the slit may be of metal, plastics, wood, or fabrics provided, if necessary, with a coating layer of plated or vacuum-deposited metal, or polytetrafluoroethylene. The slit may be formed of a pair of oppositely facing surfaces with a narrow gap, endless belts or rollers. Preferably two or more stages of slits are provided so that the effect of quenching is increased to give high-quality products with high productivity. The width of the slit in the first-stage should be 20 mm or less, preferably 10 mm or less or, more preferably 6 mm or less. The height of the slit should be least 3 mm, or preferably at least 5 mm.

In supplying the cooling water to the first-stage slit, it is preferable to avoid contacting of the running molten sheet with a surface of the water which is stagnant or at a low flow velocity forming a pool on the upper part of the slit. The level of the water in the upper part of the slit should therefore be maintained at as low a level as possible. It is important to provide a control means so that the first contacting line between the water and the running molten sheet should be uniform and without flutuation. These conditions are more important in the first stage slit and less significant in the second-stage and subsequent slits, so no control means need be provided there for the water level and flow velocity.

Water containing no particular additive may be used as the cooling water, but the water may be admixed with a surface active agent or an organic or inorganic thickening agent when improvements in the uniformity of quenching and smoothness of the surfaces of the sheet are desired. As thickening agents, various compounds such as natural polymeric substances, and synthetic substances (including semisynthetic substances) can be used. Examples of such substances includes starches such as potato starch, sweet potato starch, and wheat starch; mannans such as konnyaku; seaweeds such as agar, and sodium alginate; viscous substances originating in plants such as gum tragacanth, and gum arabic; viscous substances originating in microorganism such as dextrin, and levan; proteins such as glue, gelatin, casein, and collagen; celluloses such as viscose, methyl cellulose, and carboxymethyl cellulose; starches such as soluble starch, carboxymethyl starch, and dialdehyde starch; polyethylene glycol, polyvinyl alcohol, polymers of sodium acrylate, and polyethylene oxide, silica sol, alumina sol, clay, water glass, and various metal salts. The viscosity of the aqueous solution of the thickening agent is generally from 2 to 3,000 centipoises and preferably from 3 to 1,000 centipoises.

The temperature of the cooling water is generally from $-10$ to $+50°C$. In the production of sheet having a thickness of at least 0.2 mm, the formation of haze dots can be prevented by keeping the cooling water at $20°C$ or below, preferably $10°C$ or below. In this manner, a crystalline sheet is obtained by quenching the molten sheet to $100°C$ or below, or preferably $60°C$ or below. Although this quenching is effective for obtaining a sheet having excellent transparency, the degree of transparency depends on the thickness of the sheet. For example, the haze of a resin sheet having a thickness of 0.5 mm or less can be 10% or less or, in some cases, 5% or less. It is possible to fabricate a transparent box or container by thermoforming of the sheet regardless of thickness when the sheet has an external haze of 5% or less.

The stretching of the sheet comprises heating to from 5 to 70 C degrees or preferably from 5 to 50 degrees below the melting point and stretching or rolling. Roll stretching can be carried out between rollers at different rotating speeds. Heating can be performed continuously by hot air heating, radiation heating, or passing over a hot roll. The stretching may be uniaxial or biaxial; satisfactory results can usually be obtained by uniaxial stretching. The stretch ratio is preferably from 1.03 to 1.50 times. The optimum stretch ratio depends on the temperature and manner of stretching, and should be determined according to the intended application, thickness of the sheet and other factors. Rolling is preferred when the sheet as such is to be used as a base material for a folder or bent-sheet box, as rolling eliminates fine die lines and other defects from the surface of the sheet.

The rolling is preferably performed by passing the sheet through a gap smaller than the thickness of the sheet between a pair of rollers, each having a smooth surface with a low surface roughness, and rotating each in a direction opposite to the other. When the sheet is to be used in the fabrication of a container by thermoforming at a temperature below the melting point of the thermoplastic, the preferred stretch ratio is from 1.02 to 2.00 times for pressure moulding or from 1.02 to 1.10 times for vacuum forming.

3

A shrinking stress of 0.2 to 30 kg/cm$^2$ is usually sufficient for this stretching of the sheet, although dependent on the conditions of stretching. Stretching to only a very low degree is sufficient because the purpose is not to improve transparency but to eliminate curling and crimps in the quenched sheet, and to prevent slackening and crimps in the course of the thermoforming.

The stretching may be preceded by heat treatment of the quenched sheet. That is to say a step of heat treatment may be introduced between the quenching and the stretching. This heat treatment may comprise heating the sheet with a hot roller, hot air, or a hot inert liquid at a temperature lower than the melting point by 10 to 60 C degrees or preferably 20 to 40 degrees. This has the effect of annealing, and improves the transparency and rigidity of the sheet.

The method of the invention yields a crystalline thermoplastic sheet which is excellent in transparency, surface properties and appearance, and has good formability suitable for the fabrication of containers by vacuum and/or pressure forming. The thickness of the sheets which can be manufactured is not limited to a particular range but may be from 0.05 to 2 m, or preferably from 0.1 to 1 mm. When the thickness of the sheet is 0.5 mm or less, the lowest value of the haze is as low as 20% or less or, in some cases as low as 10% or less.

The resulting sheet has a transparency and appearance quite different from those of the conventional crystalline thermoplastic sheets. Polypropylene sheets so prepared cannot be distinguished by appearance alone from sheets of polyvinyl chloride or polystyrene. Sheets prepared according to the invention have excellent strength, and in particular strength against bending and folding without whitening, so they can be used in the fabrication of containers by bending and folding. They can also be used in the fabrication of various kinds of moulded articles such as containers by thermoforming, for example vacuum forming, pressure forming, plug assist pressure forming, or matched-moulded thermoforming at below the melting point, usually by 5 to 50 C degrees. The thermoforming can be performed at a relatively high temperature by virtue of the high transparency already imparted to the sheet, the fine crystallite size in the sheet (controlled by the quenching and the low degree of stretching) i.e. the low degree of orientation which determines good thermoformability. The shape reproducibility in the thermoforming is excellent even under a relatively low forming pressure as in vacuum forming. Therefore, relatively simple and inexpensive forming machines and moulds can be used.

In comparison with conventional crystalline thermoplastic sheets in which transparency is exhibited only on the stretching, and orientation in the course of the thermoforming, sheet prepared by the inventive method is highly transparent as such. No stretching or orientation of the sheet need be involved in the thermoforming. Without unevenness in the transparency, there can be fabricated highly uniform containers including shallow containers, deep-drawn containers and containers of complicated form. The low degree of orientation gives an advantage of a high temperature of the incipient heat shrinkage of the container in use, so that use in new fields can be expected, for example in packaging containers for retort-pouched food and containers for melt-fill packaging of heat-flowable food such as candies, and for beverages. Press-through-package of medicines and confectionery, and blister packages cna be made in this way.

## Best Mode

### Examples 1 to 7

An isotactic polypropylene having a melting point of 168°C and a melt index of 2.0 g/10 minutes was melted and extruded into a transparent molten sheet at 250°C. There was used a T-die of 550 mm width with a die lip opening of 1 mm provided with a die lip heater and mounted on an extruder having a diameter of 65 mm and L/D = 28. The extruded molten sheet was introduced into a water quenching unit A or B described below in which the molten sheet was quenched into a polypropylene sheet. All the relevant conditions are in Table 1. The sheet was then heated to 130°C on a heating roller and stretched. The tensile modulus of the stretched sheet was 19000 kg/cm$^2$. The stretched sheet was subjected to thermoforming to evaluate its formability.

*Quenching unit A* (single-stage slit)

The slit had a height of 50 mm and a width of 3 mm. The water level of the pool above the slit was 5 mm and the water at 2°C.

*Quenching unit B* (two-stage slits)

The first-stage slit had a height of 50 mm and a width of 2 mm. The water level of the pool above the slit was 5 mm. The second-stage slit had a height of 10 mm and a width of 4 mm; the water level of the pool above the slit was 10 mm and the water at 10°C.

### Example 8

The procedure was substantially the same as in Example 1. The isotactic polypropylene was replaced with a high-density polyethylene having a density of 0.960 g/cm$^3$, melting point of 130°C and melt index of 0.2 g/10 minutes. The temperature of the sheet under stretching was 110°C. A polyethylene sheet having excellent transparency was obtained.

4

### Comparative Example 1

The procedure was substantially the same as in Example 3 but the stretching was omitted. Table 1 gives the results.

### Example 9

The water-quenched sheet in Example 1 was pre-heated at 140°C and then subjected to rolling in a rolling ratio of 1.2 by passing through a pair of pressure rollers heated at 110°C. The rolled sheet obtained was free from curling, crimps, slackening, die lines and micro-fisheyes in comparison with the same sheet before rolling. It had excellent appearance and transparency and a haze value of 7%.

### Examples 10 to 16

A homopolymeric polypropylene having a density of 0.91 g/cm$^3$, melting point of 165°C and melt index of 2.1 g/10 minutes was melted and extruded at 240°C into a transparent molten sheet. There was used a T-die of 730 mm width with a die lip opening of 1.5 to 3 mm provided with a die lip heater and mounted on an extruder having a diameter of 90 mm with L/D = 28. The extruded molten sheet was quenched by continuously introducing into a water quenching unit equipped with two-stage slits. The first-stage slit had a height of 50 mm and a width of 2.5 mm. The water level of the pool above the first-stage slit was 5 mm, and the cooling water at 5°C. The second-stage slit had a height of 10 mm and a width of 5 mm. The level of the pool above the second-stage slit was 10 mm, and the water at 5°C. The conditions of extrusion were varied so that the quenched sheets varied in thickness. Each of the sheets obtained was heated by passing through a heat-treatment unit composed of 4 rollers each having a diameter of 300 mm and heated at 145°C, followed by rolling in a roll ratio of 1.1 by passing through a pair of pressure rollers each having a diameter of 200 mm and heated at 120°C.

Sheets suitable for thermoforming were obtained with different thicknesses and physical properties as shown in Table 2. No curling and crimps were found. To evaluate the thermoformability of these sheets and the transparency of containers thereof, the sheets were fabricated into approximately cylindrical containers having a diameter of 50 mm and a various depths by several different moulding methods as indicated in Table 2 which summarizes the results.

### Comparative Example 2

The procedure was substantially the same as in Example 12 but the heat treatment and the rolling treatment were omitted. The results are in Table 2.

5

<u>Table 1</u>

| | | Example | | | | | | | Comparative Example 1 |
|---|---|---|---|---|---|---|---|---|---|
| | | 1 | 2 | 3 | 4 | 5 | 6 | 7 | |
| Sheet molding | Quenching unit | B | B | B | B | B | B | A | B |
| | Rate of extrusion, m/minute | 20 | 20 | 20 | 20 | 20 | 20 | 10 | 20 |
| | Thickness, mm | 0.45 | 0.36 | 0.35 | 0.33 | 0.32 | 0.31 | 0.35 | 0.30 |
| | Haze, % | 19 | 17 | 17 | 16 | 15 | 15 | 25 | 15 |
| Stretching | Stretch ratio | 1.50 | 1.20 | 1.15 | 1.10 | 1.05 | 1.03 | 1.15 | – |
| | Haze, % | 9 | 8 | 7 | 7 | 6 | 6 | 13 | – |
| | Shrinking stress, $kg/cm^2$ | – | – | 15.0 | – | – | 0.3 | – | – |
| Forming of container | Type of thermoforming | *1 | *1 | *2 | *2 | *1 | *1 | *2 | *2 |
| | Thickness of container wall, mm | 0.17 | 0.18 | 0.15 | 0.16 | 0.17 | 0.16 | 0.16 | 0.17 |
| | Haze, % | 2 | 2 | 3 | 2 | 3 | 2 | 7 | 5*3 |

*1: The container was shaped by pressure forming using a metal mold having 10 cavities each in a semi-ellipsoidal form having a depth of 15 mm and an opening of 25 mm by 15 mm under conditions of a hot plate temperature of 140°C and a forming pressure of 4 $kg/cm^2$.

*2: The container was shaped by vacuum forming using a metal mold having 10 cavities each in a semi-ellipsoidal form having a depth of 10 mm and an opening of 25 mm by 15 mm at a sheet temperature of 157°C.

*3: Crimps were formed on the container to impart a poor appearance thereto.

** Stretch ratio (sheet) — Thermoformability

In Example 2 instead of the pressure forming, vacuum forming was undertaken at a forming temperature of 155°C without success. Containers could be shaped by increasing the molding temperature to 165°C although the containers were very poor in the transparency and surface gross.

**Table 2**

| | | | Example | | | | | | | Comparative Example 2 |
|---|---|---|---|---|---|---|---|---|---|---|
| | | | 10*1 | 11 | 12 | 13 | 14 | 15 | 16 | |
| Sheet | Thickness, mm | | 0.4 | 0.4 | 0.55 | 0.55 | 0.60 | 0.80 | 1.00 | 0.55 |
| | Haze, % | Total | 5.7 | 5.7 | 16.3 | 16.3 | 22.3 | 54.8 | 74.8 | 34.2 |
| | | Internal | 4.7 | 4.7 | 15.9 | 15.9 | 21.0 | 54.1 | 73.2 | 33.6 |
| | | External | 1.0 | 1.0 | 0.4 | 0.4 | 1.3 | 0.7 | 1.6 | 0.6 |
| Properties of sheet (MD/TD) | Tensile strength, kg/cm$^2$ | | 555/ 470 | 555/ 470 | 548/ 473 | 548/ 473 | 496/ 473 | 489/ 477 | 493/ 475 | 430/ 438 |
| | Ultimate elongation, % | | 400/ 460 | 400/ 460 | 410/ 440 | 410/ 440 | 430/ 430 | 430/ 450 | 430/ 430 | 425/ 480 |
| | Tensile modulus, kg/cm$^2$ | | 19000/ 18000 | 19000/ 18000 | 19000/ 19000 | 19000/ 19000 | 19000/ 19000 | 19000/ 18000 | 19000/ 19000 | 10800/ 10600 |
| Conditions of thermo-forming & results | Shaping method | | *2 | *3 | *2 | *3 | *3 | *3 | *3 | *2 |
| | Depth of shaped body, mm | | 13 | 13 | 25 | 25 | 50 | 100 | 100 | 25 |
| | Formability | | *4 | Good | *4 | Good | Good | Good | Good | *4 |
| Properties of container | Side wall | Thickness, mm | 0.25 | 0.22 | 0.23 | 0.16 | 0.13 | 0.15 | 0.19 | 0.25 |
| | | Haze, % | 2.3 | 2.8 | 5.3 | 6.5 | 8.2 | 8.3 | 9.1 | 10.1 |
| | Bottom | Thickness, mm | 0.19 | 0.20 | 0.16 | 0.19 | 0.16 | 0.21 | 0.25 | 0.14 |
| | | Haze, % | 1.8 | 2.3 | 1.9 | 2.1 | 2.0 | 2.5 | 3.6 | 5.8 |

*1: Extrusion velocity in sheet preparation: 16 meters/minute; average flow velocity of cooling water in slit: 59 meters/minute.
*2: Vacuum forming with the sheet heated at 153 to 158°C.
*3: Plug pressure forming with the sheet heated at 135 to 140°C under a pressure of 3 kg/cm$^2$.
*4: Somewhat smaller thickness at bottom.

EP 0 176 177 B1

# EP 0 176 177 B1

## Claims

1. A method for the preparation of a crystalline thermoplastic sheet which comprises extruding a melt of a crystalline thermoplastic into a sheet and quenching, by introduction of the sheet into a slit in the same direction as cooling water, the flow velocity of the cooling water through the slit being larger than the velocity of the sheet, and stretching the quenched sheet at a temperature below its melting point in a ratio in the range from 1.02 to 2.00 times.

2. A method according to claim 1 wherein the stretching is performed at a temperature from 5 to 70 C degrees below melting point.

3. A method according to claim 1 or claim 2 wherein the crystalline thermoplastic is a polyolefin.

4. A method according to claim 3 wherein the polyolefin is polypropylene.

5. A method according to any preceding claim wherein the quenching is performed by introducing the sheet into two stage slits in the same direction as cooling water is flowing.

6. A method according to any preceding claim wherein the quenched sheet is subjected to a heat treatment at from 10 to 60 C degrees below the melting point prior to the stretching.

## Patentansprüche

1. Methode zur Herstellung einer kristallinen thermoplastischen Folie, wobei die Schmelze eines kristallinen Thermoplastes zu einer Folie extrudiert und zum Abkühlen in der gleichen Richtung wie das Kühlwasser durch einen Schlitz geführt wird, wobei die Strömungsgeschwindigkeit des Kühlwassers durch den Schlitz größer als die Foliengeschwindigkeit ist, und die abgekühlte Folie bei einer unter dem Schmelzpunkt liegenden Temperatur um das 1,02-fache bis 2,00-fache gedehnt wird.

2. Methode gemäß Anspruch 1, dadurch gekennzeichnet, daß das Dehnen bei einer um 5 bis 70 Grad C unter dem Schmelzpunkt liegenden Temperatur erfolgt.

3. Methode gemäß Anspruch 1 oder Anspruch 2, dadurch gekennzeichnet, daß das kristalline Thermoplast ein Polyolefin ist.

4. Methode gemäß Anspruch 3, dadurch gekennzeichnet, daß das Polyolefin Polypropylen ist.

5. Methode gemäß einem der vorhergehenden Ansprüche, dadurch gekennzeichnet, daß die Folie zum Abkühlen in der gleichen Richtung wie der Kühlwasserfluß durch zweistufige Schlitze geführt wird.

6. Methode gemäß einem der vorhergehenden Ansprüche, dadurch gekennzeichnet, daß die Folie vor dem Dehnen bei einer um 10 bis 60 Grad C unter dem Schmelzpunkt liegenden Temperatur einer Wärmebehandlung unterzogen wird.

## Revendications

1. Une méthode pour la préparation d'une feuille cristallin thermoplastique qui comporte le refoulement d'une fusion d'un thermoplastique cristallin dans une feuille et le refroidissement, par l'introduction de la feuille dans une fente dans le sens d'eau de refroidissement, la vitesse d'écoulement de l'eau de refroidissement à travers la fente étant plus grande que la vitesse de la feuille, et tendant la feuille refroidie à une température inférieure à son point de fusion dans un rapport du range de 1.02 à 2.00 fois.

2. Une méthode suivant la revendication 1 dans laquelle le tendage est exécuté à une température entre 5 et 70 C degrés inférieure au point de fusion.

3. Une méthode suivant la revendication 1 ou le revendication 2 dans laquelle le thermoplastique cristallin est une polyoléfine.

4. Une méthode suivant la revendication 3 dans laquelle la polyoléfine est du polypropylène.

5. Une méthode suivant tout revendication précédent dans laquelle le refroidissement est exécuté par l'introduction de la feuille dans deux fentes échelonnées dans le même sens qui coule l'eau de refroidissement.

6. Une méthode suivant tout revendication précédent dans laquelle la feuille refroidie est exposée à un traitement thermique à entre 10 et 60 degrés inférieure au point de fusion antérierement au tendage.